Europäisches Patentamt

European Patent Office

Office européen des brevets

(11) Veröffentlichungsnummer: **0 235 492**
**B1**

(12) **EUROPÄISCHE PATENTSCHRIFT**

(45) Veröffentlichungstag der Patentschrift:
16.05.90

(51) Int. Cl.⁵: **H02B 11/04**

(21) Anmeldenummer: **86730201.0**

(22) Anmeldetag: **05.12.86**

(54) **Einschubrahmen mit einer Schutzplatte für eine Trennkontaktanordnung.**

(30) Priorität: **13.12.85 DE 3544667**

(43) Veröffentlichungstag der Anmeldung:
**09.09.87 Patentblatt 87/37**

(45) Bekanntmachung des Hinweises auf die Patenterteilung:
**16.05.90 Patentblatt 90/20**

(84) Benannte Vertragsstaaten:
**DE FR GB IT SE**

(56) Entgegenhaltungen:
**DE-U- 8 512 452**
**FR-A- 2 098 742**
**US-A- 3 614 350**
**US-A- 4 443 676**

(73) Patentinhaber: **Siemens Aktiengesellschaft,
Wittelsbacherplatz 2, D-8000 München 2(DE)**

(72) Erfinder: **Sinnig, Fred, Bekassinenweg 14,
D-1000 Berlin 27(DE)**

## Beschreibung

Die Erfindung betrifft einen Einschubrahmen für ein verfahrbar angeordnetes Schaltgerät mit einer durch eine Schutzplatte gegen Berührung gesicherten ortsfesten Trennkontaktanordnung mit folgenden Merkmalen:
Die Schutzplatte ist an Führungsteilen vertikal verschiebbar geführt;
zur Betätigung der Schutzplatte ist eine Einrichtung zur Umsetzung eines Teiles des Fahrweges des Schaltgerätes in eine Hubbewegung der Schutzplatte vorgesehen;
die Einrichtung umfaßt einen durch eine Rückstellkraft beaufschlagten Mitnehmer sowie einen mit diesem zusammenwirkenden ortsfest gelagerten Hubhebel; und
der Mitnehmer und der Hubhebel weisen einander zugewandte Arbeitsflächen auf.

Ein Einschubrahmen mit diesen Merkmalen ist durch die US-A-4 443 676 bekannt geworden. Die zur Verschiebung der Schutzplatte benötigte Kraft wird dabei durch eine Feder übertragen, die zwischen dem Mitnehmer und dem Hubhebel angeordnet ist. Nur bei einer Blockierung der Schutzplatte treten einander gegenüberstehende Arbeitsflächen des Mitnehmers und des Hubhebels miteinander in Berührung und begrenzen den Weg des Mitnehmers. Aufgrund der Kraftübertragung auf den Hubhebel mittels der Feder ist es schwierig, eine bestimmte Zuordnung zwischen der Bewegung des Mitnehmers und der Bewegung der Schutzplatte einzuhalten. Der Erfindung liegt in diesem Zusammenhang die Aufgabe zugrunde, eine zwangsläufige Abhängigkeit zwischen der Betätigung des Mitnehmers und der Bewegung der Schutzplatte herbeizuführen und darüberhinaus mit einem möglichst geringen Teil des Fahrweges des Schaltgerätes für die Betätigung der Schutzplatte auszukommen.

Diese Aufgabe wird gemäß der Erfindung durch folgende Merkmale gelöst:
Der Mitnehmer ist an einer Seitenwand des Einschubrahmens in der Richtung des Fahrweges des Schaltgerätes geradlinig verschiebbar geführt;
die Arbeitsflächen sind als alleiniges Mittel zur Kraftübertragung zwischen dem Mitnehmer und dem Hubhebel ausgebildet und
der Mitnehmer und der Hubhebel besitzen zur Blockierung des Hubhebels im Ruhezustand der Einrichtung formschlüssig zusammenwirkend ausgebildete Endteile. Durch den Formschluß wird eine unzulässige Verschiebung der Schutzplatte verhindert, wenn nur eine von üblicherweise zwei vorgesehenen gleichen Einrichtungen betätigt wird. Ferner ist durch eine geeignete Ausbildung der Arbeitsflächen zu erreichen, daß ein überraschend geringer Teil des Fahrweges, der geringer als 1 cm sein kann, mit großer Genauigkeit bei Wiederholung des Vorganges einen Hub der Schutzplatte von etwa 3 cm oder mehr bewirkt.

Das erwähnte formschlüssige Zusammenwirken zwischen den Endteilen des Mitnehmers und des Hubhebels kann dadurch erreicht werden, daß die Endteile hakenartig ineinander greifend ausgebildet sind und daß die Überdeckung der Endteile einer ausgehend vom Ruhezustand bis zur Berührung der Arbeitsflächen zurückzulegenden Verschiebung des Mitnehmers entspricht. Dies bedeutet, daß ein Teil des Arbeitsweges des Mitnehmers zur Verriegelung bzw. Entriegelung der Einrichtung benutzt wird und daß erst unmittelbar nach der Freigabe die Hubbewegung der Schutzplatte beginnen kann.

Ferner erweist es sich als vorteilhaft, wenn der Mitnehmer anschließend an seine Arbeitfläche eine Stützfläche zur rückwirkungsfreien Aufnahme einer auf dem Hubhebel lastenden Kraft besitzt. Hierdurch wird erreicht, daß die Gewichtskraft der Schutzplatte in der angehobenen Stellung keine Rückstellkraft auf den Mitnehmer ausübt, sondern über den Mitnehmer und dessen Führungselemente auf den Einschubrahmen übertragen wird. Es hat sich gezeigt, daß die Stützfläche durch eine dem Hubhebel zugewandte Außenfläche des hakenartigen Endteiles gebildet werden kann.

Für die Funktion der Einrichtung ist es vorteilhaft, wenn das Schwenklager des Hubhebels in einer oberhalb der Stützfläche des Mitnehmers liegenden Ebene angeordnet ist und wenn die hakenartigen Endteile des Mitnehmers und des Hubhebels einander gegenüberstehende Stirnflächen besitzen. Auf diese Weise wird aus der Rückstellbewegung des Mitnehmers eine zusätzlich zu der Gewichtskraft der Schutzplatte wirkende Rückstellkraft ausgeübt um diese in die Ausgangslage zurückzubringen, wenn aus beliebigen Grund der Bewegungswiderstand der Schutzplatte erhöht ist.

Wie bereits erwähnt, ist der Mitnehmer in dem Einschubrahmen geradlinig verschiebbar geführt. Im Zusammenhang hiermit kann der Mitnehmer in seiner Ruhestellung bis zur bedienungsseitigen Vorderkante des Einschubrahmen reichend ausgebildet sein und kann nahe seinem Ende eine Öffnung für ein den Mitnehmer gegen Betätigung sperrendes Sicherungsorgan besitzen. Hierzu kann in bekannter Weise ein Vorhängeschloß benutzt werden, dessen Schloßbügel durch die Öffnung des Mitnehmers und eine in dem Einschubrahmen hiermit korrespondierend angeordnete Öffnung hindurchgeführt wird.

Die Erfindung wird im folgenden anhand des in den Figuren dargestellten Ausführungsbeispieles näher erläutert.

Die Figur 1 zeigt einen Einschubrahmen mit einer Einrichtung zur Betätigung einer Schutzplatte in einer vereinfachten perspektivischen Darstellung mit einem schematisch angedeuteten Niederspannungs-Leistungsschalter.

In der Figur 2 ist der Einschubrahmen gemäß der Figur 1 mit angehobener Schutzplatte ohne den Leistungsschalter dargestellt.

Der in den Figuren gezeigte Einschubrahmen 1 dient zur Aufnahme eines Niederspannungs-Leistungsschalters 2, an dessen Rückseite schienenartige Anschlußstücke 3 und 4 angeordnet sind. Drei obere Anschlußstücke 3 und drei weitere, untere Anschlußstücke 4 sind in parallelen Reihen angeordnet, wobei jeweils ein oberes Anschlußstück 3 und ein unteres Anschlußstück 4 zu einem Pol des Leistungsschalters gehören. Zur Führung in dem Einschubrahmen 1 ist der Leistungsschalter 2 mit Fußwinkeln 5 versehen, die zum Gleiten auf einer Bodenplatte 6 des Einschubrahmen 1 oder auf hierzu besonders vorgesehenen Führungsteilen geeignet sind. Zur Verbindung des Leistungsschalters 2 mit ortsfesten Leitern dient eine an der Rückseite des Einschubrahmens 1 angeordnete Trennkontaktanordnung 7, die mit den Anschlußstücken 3 und 4 zusammenwirkend ausgebildete Trennkontaktblöcke enthält. Hierfür geeignet sind beispielsweise Trennkontaktblöcke nach der US-A-4 486 636. Der Trennkontaktanordnung 7 ist eine Schutzplatte 10 vorgelagert, die Durchtrittsöffnungen 11 für die oberen Anschlußstücke 3 des Leistungsschalters 2 und untere Durchtrittsöffnungen 12 für die unteren Anschlußstücke 4 aufweist. An den Seitenwänden 13 und 14 des Einschubrahmens 1 sind Führungsschlitze 15 und 16 zur vertikalen Führung der Schutzplatte 10 angebracht.

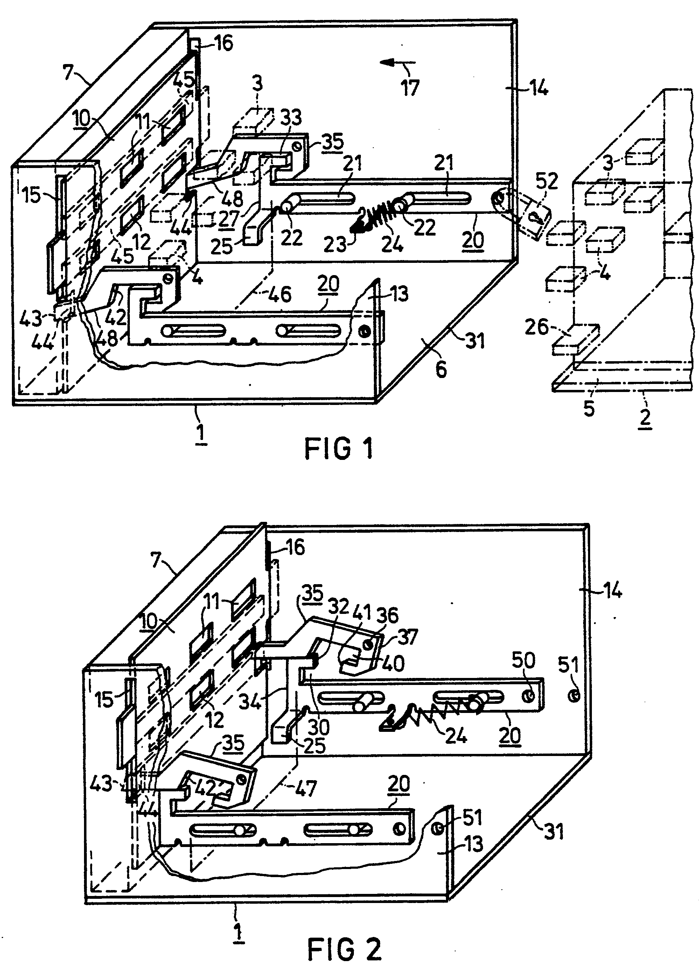

In der in der Figur 1 gezeigten Ruhestellung der Schutzplatte 10 sind die Trennkontaktblöcke der Trennkontaktanordnung 7 verdeckt. Hierdurch ist der geforderte Schutz gegen die Berührbarkeit spannungführender Teile in dem Einschubrahmen 1 gewährleistet. Die im folgenden zu beschreibende Einrichtung dient dazu, beim Einfahren des Leistungsschalters 2 in der Richtung des Pfeiles 17 eine selbsttätige Anhebung der Schutzplatte 10 um ein solches Maß zu bewirken, daß die Anschlußstücke 3 und 4 des Leistungsschalters 2 durch die Durchtrittsöffnungen 11 und 12 der Schutzplatte 10 hindurchtreten und mit den dahinter befindlichen Trennkontaktblöcken in Eingriff gelangen können. Hierzu ist an jeder der Seitenwände 13 und 14 des Einschubrahmens 1 ein Mitnehmer 20 angebracht, der zwei Langlöcher zur geradlinigen Führung auf in die Seitenwände eingesetzten Bolzen 22 besitzt. Zwischen einem der Bolzen 22 und einem abgebogenen Lappen 23 des Mitnehmers 20 ist eine Zugfeder 24 als Rückstellfeder für den Mitnehmer 20 eingehängt. Am inneren Ende des Mitnehmers 20 ist ein in das Innere des Einschubrahmens 1 hineinragender Fortsatz 25 angebracht, der mit einer geeigneten Gegenfläche des Leistungsschalters 2 zusammenwirkt. Als Beispiels hierfür ist in der Figur 1 ein oberhalb des Fußwinkels 5 angebrachter Anschlag 26 gezeigt.

Gleichfalls an seinem innenliegenden Ende ist der Mitnehmer 20 mit einem hakenartigen Endteil 27 versehen, der eine Eintrittsöffnung 30, eine zur Vorderkante 31 des Einschubrahmens 1 weisende Stirnfläche 32 sowie eine außenliegende Stützfläche 33 bildet. Ferner besitzt der Endteil 27 eine rückwärtige Arbeitsfläche 34.

Gleichfalls an den Seitenwänden 13 und 14 des Einschubrahmens 1 ist jeweils ein Hubhebel 35 auf einem Bolzen 36 schwenkbar gelagert. Dieses Schwenklager befindet sich in einer oberhalb der Stützfläche 33 des Endteiles 27 des Mitnehmers 20 liegenden Ebene, um im Störungsfall ein noch zu erläuterndes Zusammenwirken zwischen dem Mitnehmer 20 und dem Hubhebel 35 zu bewirken. Der Hubhebel 35 besitzt gleichfalls ein hakenartiges Endteil 37, das eine zum Inneren des Einschubträgers 1 weisende Eintrittsöffnung 40 sowie eine Endfläche 41 bildet. Der Eintrittsöffnung 40 gegenüberliegend besitzt der Hubhebel 35 eine Arbeitsfläche 42, die mit der Arbeitsfläche 34 des Mitnehmers 20 zusammenwirkt. Mit seinem hinteren Endteil 43 greift jeder Hubhebel 35 in eine seitliche Ausnehmung 44 der Schutzplatte 10 ein. Durch Schwenkung der Hubhebel 35 um ihre Lagerbolzen 36 ist somit die Schutzplatte 10 aus der in der Figur 1 gezeigten Ruhestellung in die in der Figur 2 gezeigte Betriebsstellung anhebbar. Dabei gelangen die Durchtrittsöffnungen 11 und 12 der Schutzplatte 10 über in der Figur 1 gestrichelt angedeutete Schutzleisten 45, um den Durchtritt der Anschlußtücke 3 und 4 des Leistungsschalters 2 zu der Trennkontaktanordnung 7 zu gestatten.

Beim Einfahren des Leistungsschalters 2 in den Einschubrahmen 1 in Richtung des Pfeiles 17 gelangen dessen Anschläge 26 in der durch die strichpunktierte Linie 46 in der Figur 1 angedeuteten Stellung in Berührung mit den Fortsätzen 25 der Mitnehmer 20. Gleichfalls strichpunktiert angedeutet sind die Anschlußstücke in dieser Stellung. Bei weiterer Bewegung des Leistungsschalters 2 werden nun die Mitnehmer 20 gleichfalls verschoben, wobei ihre hakenartigen Endteile 27 außer Eingriff mit den hakenartigen Endteilen 37 der Hubhebel 35 gelangen. Damit sind die Hubhebel 35 freigegeben und können geschwenkt werden. Dies geschieht durch das Zusammenwirken der Arbeitsflächen 34 an dem der Schutzplatte 10 zugewandten Seite der Endteile 27 der Mitnehmer 20 mit den Arbeitsflächen 42 der Hubhebel 35. Durch eine geeignete Wahl der Winkelstellung dieser Arbeitsflächen ist zu erreichen, daß die zum Anheben der Schutzplatte 10 benötigte Schwenkbewegung der Hubhebel 35 auf einem verhältnismäßig kurzen Teil des Fahrweges des Leistungsschalters 2 herbeigeführt wird. Auf diese Weise wird ein hohes Maß von Arbeitssicherheit erreicht, da erst dann die Schutzplatte 10 angehoben und der Durchtritt zu der Trennkontaktanordnung 7 freigegeben wird, wenn sich die Anschlußstücke 3 und 4 des Leistungsschalters 2 unmittelbar vor der Schutzplatte 10 befinden. Das Berühren spannungführender Teile ist dadurch ausgeschlossen. Die Figur 2 zeigt die Teile in ihrer Endstellung. Die Position des Leistungsschalters 2 ist dabei durch eine strichpunktierte Linie 47 gekennzeichnet.

Die Arbeitsfläche 42 des Hubhebels 35 ist so bemessen, daß sie von der Arbeitsfläche 34 des Mitnehmers 20 abgleitet, sobald die Schutzplatte 10 ihre Betriebsstellung erreicht hat. Dann gelangt die Unterseite 48 jedes Hubhebels 35 auf die Stützfläche 33 jedes Mitnehmers 20, wodurch das Gewicht der Schutzplatte 10 ohne Rückwirkung auf die Stellung des Mitnehmers 20 aufgenommen wird. Für die Rückführung der Einrichtung in die in der Figur 1 gezeigte Ausgangsstellung ist daher allein die Kraft der Schraubenfedern 24 maßgebend.

Wird der Leistungsschalter 2 aus dem Einschubrahmen 1 ausgefahren, so folgen die Mitnehmer 20 zunächst unter dem Einfluß der Kraft der Schraubenfedern 24 der Bewegung des Leistungsschalters 2. Dabei gleitet der Endteil 43 der Hubhebel 35 von den Stützflächen 33 der Mitnehmer 20 ab, bis die Arbeitsflächen 34 und 42 wieder miteinander in Berührung treten. Dies entspricht der Stellung des Leistungsschalters 2, in der dessen Anschlußstücke 3 und 4 die Trennkontaktanordnung 7 sowie die Durchtrittsöffnungen 11 und 12 der Schutzplatte 10 verlassen haben. Aufgrund der Gestaltung der Arbeitsflächen 34 und 42 führen nun die Hubhebel 35 wiederum auf einem kurzen Teil des Fahrweges des Leistungsschalters 2 die zum Absenken der Schutzplatte 10 erforderliche Schwenkbewegung aus. Anschließend tritt der Endteil 27 jedes Mitnehmers 20 in die Eintrittsöffnung 40 jedes Hubhebels 35 ein, während der Endteil 37 jedes Hubhebels 35 in die Eintrittsöffnung 30 des zugehörigen Mitnehmers 20 gelangt. Hierdurch wird der Formschluß wiederhergestellt, durch den eine von den Mitnehmern 20 unabhängige Verschiebung der Schutzplatte 10 verhindert ist.

Falls der Bewegungswiderstand der Schutzplatte 10 beim Ausfahren des Leistungsschalters 2 durch beliebige Einflüsse vergrößert sein sollte, z. B. durch Verklemmen der Schutzplatte in den Führungsschienen 15 oder 16 oder beiden, so wird beim Aufeinandertreffen der Stirnflächen 32 und 41 der Mitnehmer 20 und der Hubhebel 35 eine zusätzliche Rückstellkraft ausgeübt. Hierzu wird die Kraft der Rückstellfedern 24 über die Mitnehmer 20 auf die Hubhebel 35 mit einem Hebelarm übertragen, der dem Abstand der Stirnflächen 41 von dem Lagerbolzen 36 entspricht. Zur weiteren Vergrößerung der Arbeitssicherheit kann es erwünscht sein, die Betätigung der beschriebenen Einrichtung unabhängig von dem Einfahren eines Leistungsschalters zu verhindern oder zusätzlich eine Sperre gegen das Einfahren eines Leistungsschalters zu bewirken. Hierzu sind die Mitnehmer 20 so ausgebildet, daß sie bis zu der Vorderkante 31 des Einschubrahmens 1 reichen und dort eine Öffnung 50 besitzen. Eine weitere Öffnung 51 ist jeweils in den Seitenwänden 13 und 14 des Einschubrahmens 1 vorgesehen. Die Öffnungen 50 und 51 korrespondieren miteinander, wenn sich die Mitnehmer 20 in der Ruhestellung gemäß der Figur 1 befinden. Wird nun, wie dies in der Figur 1 angedeutet ist, der Schloßbügel eines Vorhängeschlosses 52 durch die Öffnungen 50 und 51 hindurchgeführt, so ist der betreffende Mitnehmer 20 gegen Betätigung gesperrt. Zugleich bildet das Vorhängeschloß 52 ein Hindernis für das Einfahren des Leistungsschalters 2. Durch ein weiteres Vorhängeschloß an der Seitenwand 13 kann eine zusätzliche Sicherung erzielt werden.

Wie die vorstehende Beschreibung zeigt, ist die Einrichtung zur Betätigung der Schutzplatte 10 unabhängig von einer speziellen Gestaltung des Einschubrahmens 1 anwendbar. Auch der Leistungsschalter 2 kann einer beliebigen geeigneten Bauform angehören, da es nur erforderlich ist, daß eine mit dem Fortsatz 25 der Mitnehmer 20 zusammenwirkende Kante oder Arbeitsfläche vorhanden ist. Ein gesonderter Anschlag entsprechend dem Anschlag 26 in der Figur 1 ist daher nicht unbedingt erforderlich.

**Patentansprüche**

1. Einschubrahmen (1) für ein verfahrbar angeordnetes Schaltgerät (2) mit einer durch eine Schutzplatte (10) gegen Berührung gesicherten ortsfesten Trennkontaktanordnung (7) mit folgenden Merkmalen:
– die Schutzplatte (10) ist an Führungsteilen (15, 16) vertikal verschiebbar;
– zur Betätigung der Schutzplatte (10) ist eine Einrichtung zur Umsetzung eines Teiles des Fahrweges des Schaltgerätes (2) in eine Hubbewegung der Schutzplatte (10) vorgesehen;
– die Einrichtung umfaßt einen durch eine Rückstellkraft (24) beaufschlagten Mitnehmer (20) sowie einen mit diesem zusammenwirkenden ortsfest gelagerten Hubhebel (35);
– der Mitnehmer (20) und der Hubhebel (35) weisen einander zugewandte Arbeitsflächen (34; 42) auf; gekennzeichnet **durch** folgende Merkmale:
– der Mitnehmer (20) ist an einer Seitenwand (13, 14) des Einschubrahmens (1) in der Richtung des Fahrweges (17) des Schaltgerätes (2) geradlinig verschiebbar geführt;
– die Arbeitsflächen (34; 42) sind als alleiniges Mittel zur Kraftübertragung zwischen dem Mitnehmer (20) und dem Hubhebel (35) ausgebildet;
– der Mitnehmer (20) und der Hubhebel (35) besitzen zur Blockierung des Hubhebels (35) im Ruhezustand der Einrichtung formschlüssig zusammenwirkend ausgebildete Endteile (27; 37).

2. Einschubrahmen nach Anspruch 1, dadurch gekennzeichnet, daß die Endteile (27; 37) des Mitnehmers (20) und des Hubhebels (35) hakenartig ineinandergreifend ausgebildet sind und daß die Überdeckung der Endteile (27; 37) einer ausgehend vom Ruhestand bis zur Berührung der Arbeitsflächen (34; 42) zurückzulegenden Verschiebung des Mitnehmers (20) entspricht.

3. Einschubrahmen nach Anspruch 1, dadurch gekennzeichnet, daß der Mitnehmer (20) anschließend an seine Arbeitsfläche (34) eine Stützfläche (33) für den Hubhebel (35) zur rückwirkungsfreien Aufnahme einer auf dem Hubhebel (35) lastenden Kraft besitzt.

4. Einschubrahmen nach Anspruch 2 und 3, dadurch gekennzeichnet, daß die Stützfläche (33) durch eine dem Hubhebel (35) zugewandte Außenfläche des hakenartigen Endteiles (27) gebildet ist.

5. Einschubrahmen nach den Ansprüchen 2 und 3, dadurch gekennzeichnet, daß das Schwenklager (36) des Hubhebels (35) in einer oberhalb der Stützfläche (33) des Mitnehmers (20) liegenden Ebene angeordnet ist und daß die hakenartigen Endteile (27, 37) des Mitnehmers (20) und des Hubhebels (35) einander gegenüberstehende Stirnflächen (32; 41) besitzen.

6. Einschubrahmen nach einem der vorangehenden Ansprüche, dadurch gekennzeichnet, daß der Mitnehmer (20) in seiner Ruhestellung bis zur bedienungsseitigen Vorderkante (31) des Einschubrahmens (1) reichend ausgebildet ist und nahe seinem Ende eine Öffnung (50) für ein den Mitnehmer (20) gegen Betätigung sperrendes Sicherungsorgan (52) besitzt.

## Claims

1. Withdrawable frame (1) for a movably arranged switch device (2) with a stationary isolating contact arrangement (7) which is secured against contact by a guard plate (10) and with the following features:
- the guard plate (10) is vertically movable on guide parts (15, 16);
- an arrangement for converting a part of the travel path of the switch device (2) into a lifting movement of the guard plate (10) is provided for actuation of the guard plate (10);
- the arrangement comprises a driver (20) which is acted upon by restoring force (24) as well as a lifting lever (35) which has a stationary mounting and co-operates with the said driver;
- the driver (20) and the lifting lever (35) have working surfaces (34; 42) which face one another;
characterised by the following features:
- the driver (20) is guided on one side wall (13, 14) of the withdrawable frame (1) in the direction of the travel path (17) of the switch device (2) so that it can be displaced in a straight line;
- the working surfaces (34; 42) are constructed as the sole means for transmitting force between the driver (20) and the lifting lever (35);
- the driver (20) and the lifting lever (35) have end parts (27; 37) which are constructed so that they co-operate in a form-locking manner in order to block the lifting lever (35) when the arrangement is in the rest state.

2. Withdrawable frame according to claim 1, characterised in that the end parts (27; 37) of the driver (20) and of the lifting lever (35) are constructed like hooks to engage in one another and the overlap of the end parts (27; 37) corresponds to a movement to be covered by the driver (20) from the state of rest to the contact between the working surfaces (34; 42).

3. Withdrawable frame according to claim 1, characterised in that the driver (20) has, near its working surface (34), a supporting surface (33) for the lifting lever (35) to absorb a force acting on the lifting lever (35) so that there is no repercussion.

4. Withdrawable frame according to claims 2 and 3, characterised in that the supporting surface (33) is formed by an outer surface of the hook-like end part (27), which surface faces the lifting lever (35).

5. Withdrawable frame according to claims 2 and 3, characterised in that the pivot bearing (36) of the lifting lever (35) is arranged in a plane lying above the supporting surface (33) of the driver (20) and that the hook-like end parts (27, 37) of the driver (20) and of the lifting lever (35) have opposing front faces (32; 41).

6. Withdrawable frame according to one of the preceding claims, characterised in that the driver (20) is constructed so that in its rest position it extends as far as the front edge (31) on the service side of the withdrawable frame (1) and has near its end an opening (50) for a securing device (52) which locks the driver (20) against actuation.

## Revendications

1. Cadre formant tiroir (1) pour un appareil mobile de coupure (2) comportant un dispositif fixe à contacts de coupure (7), protégé contre tout contact physique par une plaque de protection (10), présentant les caractéristiques suivantes:
- la plaque de protection (10) est déplaçable verticalement le long d'éléments de guidage (15, 16);
- pour l'actionnement de la plaque de protection (10), il est prévu un dispositif servant à convertir une partie de la course de déplacement de l'appareil de coupure (2) en un déplacement de levage de la plaque de protection (10);
- le dispositif comporte un organe d'entraînement (20) chargé par une force de rappel (24), ainsi qu'un levier de soulèvement (35) monté fixe, qui coopère avec cet organe d'entraînement;
- l'organe d'entraînement (20) et le levier de soulèvement (35) possèdent des surfaces de travail (34; 42) situées en vis-à-vis;
caractérisé par les caractéristiques suivantes:
- l'organe d'entraînement (20) est guidé de manière à être déplaçable selon un mouvement rectiligne dans la direction du trajet de déplacement (17) de l'appareil de coupure (2), contre une paroi latérale (13, 14) du cadre formant tiroir (1);
- les surfaces de travail (34, 42) sont réalisées sous la forme d'un dispositif unique servant à transmettre la force entre l'organe d'entraînement (20) et le levier de soulèvement (35);
- l'organe d'entraînement (20) et le levier de soulèvement (35) possèdent des parties d'extrémité (27; 37) agencées de manière à coopérer selon une liaison par formes complémentaires, lorsque le dispositif est dans l'état de repos, pour réaliser le blocage du levier de soulèvement (35).

2. Cadre formant tiroir suivant la revendication 1, caractérisé par le fait que les parties d'extrémité (27; 37) de l'organe d'entraînement (20) et du levier de soulèvement (35) sont agencées à la manière de crochets s'accrochant l'un dans l'autre et que le recouvrement des parties terminales (27; 37) correspond à un déplacement de l'organe d'entraînement (20), exécuté à partir de l'état de repos jusqu'à la venue en contact des surfaces de travail (34; 42).

3. Cadre formant tiroir suivant la revendication 1, caractérisé par le fait que l'organe d'entraînement (20) possède, à la suite de sa surface de travail (34), une surface d'appui (33) pour le levier de soulèvement (35), permettant d'absorber, sans réaction, une force appliquée au levier de soulèvement (35).

4. Cadre formant tiroir suivant les revendications 2 et 3, caractérisé par le fait que la surface d'appui (33) est formée par une surface extérieure, tournée vers le levier de soulèvement (35), de la partie d'extrémité en forme de crochet (27).

5. Cadre formant tiroir suivant les revendications 2 et 3, caractérisé par le fait que le palier (36) de support du levier de soulèvement (35) est disposé dans un plan situé au-dessus de la surface d'appui (33) de l'organe d'entraînement (20), et que les parties d'extrémité en forme de crochets (27, 37) de l'organe d'entraînement (20) et du levier de soulèvement (35) possèdent des surfaces frontales (32; 41) situées en vis-à-vis.

6. Cadre formant tiroir suivant l'une des revendications précédentes, caractérisé par le fait que l'organe d'entraînement (20) est réalisé de manière à s'étendre, dans sa position de repos, jusqu'au bord avant (31), situé sur le côté d'actionnement, du cadre formant tiroir (1) et possède, à proximité de son extrémité, une ouverture (50) pour un organe de blocage (52), qui bloque l'organe d'entraînement (20) contre tout actionnement.

FIG 1

FIG 2

EP 0 235 492 B1